# EUROPEAN PATENT APPLICATION

(11) **EP 1 512 702 A1**
(43) Date of publication of application: **09.03.2005**
(21) Application number: 03102660.2
(22) Date of filing: 27.08.2003
(51) Int. Cl.: C08F 10/00, C08F 4/64

(54) **Supported olefin polymerisation catalyst**

(71) Applicant: TOTAL PETROCHEMICALS RESEARCH FELUY, 7181 Seneffe (Feluy) (BE)
(72) Inventor: Razavi, Abbas, B-7000, Mons (BE)

(57) **Abstract**

The resent invention discloses a method for making a supported olefin polymerisation catalyst, including the steps of:
(a) forming a solid support comprising a metal adsorbent having a chiral adsorbate adsorbed to the surface thereof;
   whereby the presence of the chiral adsorbate favours the formation of chiral or pro-chiral crystal faces of the solid support crystal lattice and;
(b) immobilising a catalyst or pre-catalyst thereof on the chiral or pro-chiral crystal faces, and optionally activating the pre-catalyst, to form a supported olefin polymerisation catalyst.

## Description

The present invention concerns a new solid supported olefin polymerisation catalyst and a method for making the same. The invention further concerns a method for producing stereoregular polyolefins using a support ed catalyst according to this invention. The invention also relates to polyolefins produced using the method of the invention. The invention is especially effective when applied to a Ziegler-Natta, metallocene or post-metallocene type catalyst system.

Olefins having three or more carbon atoms can be polymerised to produce a polymer with an isotactic stereochemical configuration. This means that in a polymer having general formula [-CH₂-CHR-]ₙ, all of the substituted carbons have the same stereo configuration and, with a hypothetical straight chain, all the substituents are on the same side of the chain. In the case of polypropylene, this can be represented as:

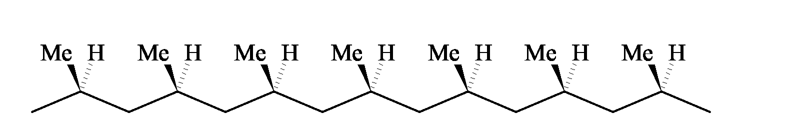

Isotactic and syndiotactic polypropylenes are prepared by polymerisation using stereospecific catalysts. In this regard, three classes of catalyst system may be mentioned.

A first class is the Ziegler-Natta catalyst systems. A Ziegler-Natta catalyst system comprises a pre-catalyst and an activating agent. The pre-catalyst is a transition metal derivative, typically a halide or ester of a transition metal, such as TiCl₄. The activating agent is an organometallic derivative where the metal belongs to the main groups I, II or III.

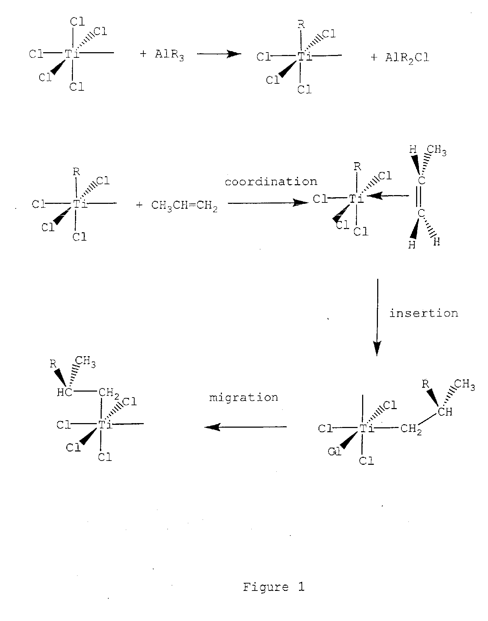

An example of a Ziegler-Natta catalyst system is (C₂H₅)₃Al/TiCl₄. A proposed mechanism for polymerisation using this catalyst system is shown in Figure 1.

It can be seen from Figure 1 that in order to obtain a stereoregular polymer, the absorption of the monomer on the catalyst surface must be controlled so that orientation of the incoming monomer always is the same.

In the case of iso-selective Ziegler-Natta catalysts, the delta/lambda chirality of the Ti sites, embedded in the three-dimensional lattice, combined with proper local symmetry environment, provides the necessary and sufficient conditions for the formation of a stereoregular olefin polymer, for example, isotactic polypropylene.

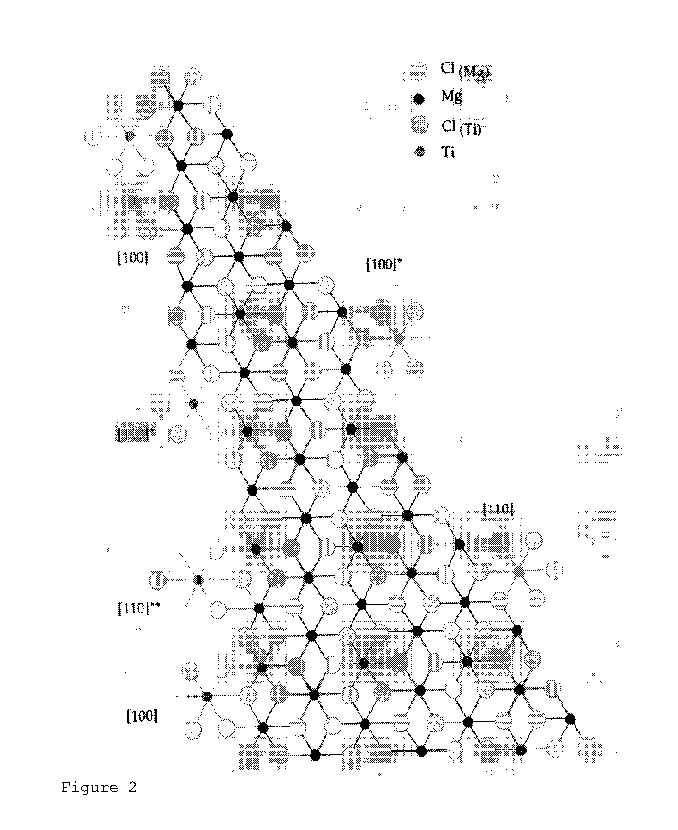

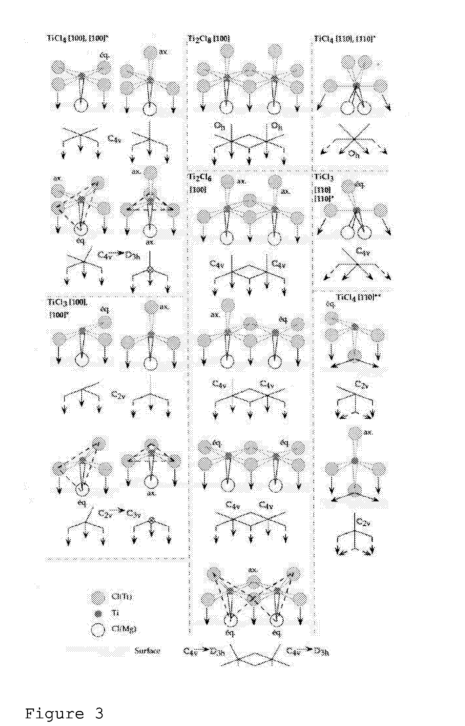

Figures 2 and 3 show TiCl₄ supported on MgCl₂ which when treated with an aluminium alkyl is transformed into the α(,α,α)-modification of TiCl₃. The crystal structure of the support is isomorphous with the crystal structure of the TiCl₃. Growth of the TiCl₃ on the support is epitactic.

Two approaches may be considered for the formation of TiCl₃ supported on MgCl₂.

A first approach uses TiCl₃ as a starting material. TiCl₃ exists in the form of a solid. In the lattice structure, the Ti centres have inherent chirality. The TiCl₃ may be immobilised on a support, however, heterogenisation of this catalyst in fact is optional.

A second approach uses TiCl₄ as a starting material. This is a liquid and so, in use, it is supported/heterogenized, for example on MgCl₂. The Ti centres in TiCl₄ do not have inherent chirality. Therefore, the supported TiCl₄ must be activated. A suitable activating agent is AlEt₃. This will transform the supported TiCl₄ to supported TiCl₃ that is active and chiral.

As mentioned above, the symmetry environment of the Ti centres is very important for controlling the stereochemical configuration of a polyolefin product. However, it will be seen particularly from Figure 2 that the exposed Ti centres do not have inherent chirality on all crystallographic planes. Taking the case shown in Figure 2 as an example, it can be seen that [100] and [110] crystallographic planes are present. [110] faces are believed to be responsible for the formation of atactic sites in the active catalyst whereas perfect [100] crystallographic planes lead to the formation of highly stereospecific sites. Unfortunately, TiCl₃ will grow on both of these faces although only the [100] faces will be useful for catalysing the formation of a stereoregular polyolefin such as isotactic polypropylene.

It is known to use so-called internal agents, employed as solvent, solution or internal donors, in order to selectively poison sites not having the desired/correct environment. In the case of TiCl₃ supported on MgCl₂, an organic agent that is an electron donor may be used as a selective "poison". The purpose of the internal agent is to eliminate faces with non-chiral Ti centres. This is achieved by the internal agent (electron donor) co-ordinating to and blocking a highly electrophilic Mg site on a [110] face.

Unfortunately, it has been found that in the majority of cases, the "poison" is removed by the activating agent. Therefore, work has been done in order to try to find new organic materials that are electron donors that are suitable for use as selective "poisons" and that are not removed by the activating agent.

Despite work done in this field to discover new and more effective electron donors, the method of selectively "poisoning" sites not having the correct/desirable environment is not entirely satisfactory. This is in part because the addition of an electron donor during processing increases the number of steps in the process, increases the cost of the process and, also, has environmental effects due to the nature of the electron donors that may be used.

In view of the advantages of stereoregular polyolefins, it will be appreciated that polymerisation methods that allow selection of the tacticity of the polymer product so as to be able to produce selectively, for example, an isotactic polyolefin are highly desirable. Whilst some methods for controlling the polymer architecture and microstructure already are known, it is highly desirable to provide alternative methods for controlling polymer architecture and microstructure or methods that can further enhance existing control over polymer architecture and microstructure.

As such, the present inventors have at least partially addressed the problems outlined above by providing, in a first aspect of the present invention a method for making a supported olefin polymerisation catalyst, including the steps of:
(a) forming a solid support comprising a metal adsorbent having a chiral adsorbate adsorbed to the surface thereof; whereby the presence of the chiral adsorbate favours the formation of chiral or pro-chiral crystal faces of the solid support crystal lattice and;
(b) immobilising a catalyst or pre-catalyst thereof on the chiral or pro-chiral crystal faces, and optionally activating the pre-catalyst, to form a supported olefin polymerisation catalyst.

A second aspect of the present invention provides a supported olefin polymerisation catalyst obtained or obtainable by the method according to the first aspect of the present invention whereby the catalyst has an increased number of chiral crystal faces. This increase is measured in comparison to a corresponding supported catalyst crystal lattice that has not been prepared in accordance with the first aspect of the present invention. This increase is measurable by X-ray crystallography and/or by electron microscopy and/or by polymerisation results (determination of microstructure and/or stereoregularity of the polymer).

It will be appreciated that in contrast to the prior art where catalyst active sites not having a desired environment have been selectively "poisoned", the present method succeeds in at least partially avoiding the formation of such sites at all. In this regard, the present inventors have appreciated the importance of the uniform topology of crystalline faces of a support lattice for providing the proper chiral environment of catalyst active centres supported thereon.

Further, the present method is advantageous in so far as it is possible to work on the nano-scale since only a cluster of a few metal atoms is sufficient to act as a support.

The present inventors noted that it is known to use a chiral "modifier" molecule in order to induce enantioselectivity in a heterogeneous catalytic system that uses a metal catalyst. The chiral "modifier" molecule is adsorbed onto the reactive metal surface. A variety of ordered overlaid structures are produced in which preferred molecular forms, bonding and orientations of the chiral molecules are adopted on the metal surface. These forms are dependent on coverage, temperature and time. The different adlayers play a different role in the enantioselective reaction. J. Phys. Chem. B 1999, 103, page 10661-10669 describes in particular that under certain conditions, the two - dimensional order of an R, R-tartaric acid adlayer on a Cu [110] surface destroys all symmetry elements at the surface, leading to the creation of extended chiral surfaces. It is suggested that such chiral surfaces may be an important factor in defining the active site in heterogeneous enantioselective reactions. This document does not mention at all the possibility of using the chiral modifier molecules in the production of a supported olefin polymerisation catalyst.

In contrast to the disclosure of J. Phys. Chem. as discussed above where the symmetry elements at the surface of the metal catalyst *per se* are destroyed to create an extended chiral surface, the present inventors propose providing a solid support comprising a metal adsorbent having a chiral adsorbate adsorbed to the surface thereof whereby the support has extended chiral or pro-chiral surfaces. Symmetry elements of the underlying metal are broken due to self organisation of the chiral adsorbate which allows chirality or pro -chirality to be directly bestowed onto the achiral metal surface.

The chiral adsorbate is capable of acting as a ligand to the active site of an olefin polymerisation catalyst. In this regard, the chirality or pro-chirality of the surfaces of the support as discussed above bestow chirality onto the active centres of the olefin polymerisation catalyst. As such, an advantageous supported olefin polymerisation catalyst is formed.

Typically, the chiral adsorbate is maintained on the metal adsorbent when immobilising a catalyst or pre-catalyst thereof on the chiral or pro-chiral crystal faces. In this embodiment, the chiral adsorbate may act as a ligand that complexes to a transition metal in order to create a metallocene or post-metallocene active centre.

Until now, the orientation of crystal faces of a support crystal lattice or, more preferably, the chirality of crystal faces of a support lattice has not been controlled during latt ice formation for the purpose of favouring firstly the formation of chiral or pro-chiral faces of the support crystal lattice and later the formation of topologically chiral faces of the supported catalyst. This new method of control has been provided onl y by the present invention and is predicted to be particularly effective.

It has been found in the present method that the presence of a chiral adsorbate in a metal-containing electrolyte favours the formation of crystal faces (crystallographic planes) wi th similar chirality during electrolysis. Without wishing to be bound by theory, this can be equated to a "key -lock" phenomenon i.e. the shape selectivity of a receptor for an incoming molecule.

In essence, the present method avoids the need for the addi tion of an electron donor to "poison" surfaces that do not provide the correct/desired environment. This greatly simplifies the polymerisation reaction and also reduces cost. Further, the avoidance of organic electron donors has environmental advantages.

The performance of a supported olefin polymerisation catalyst according to this invention in a method for making a stereoregular polymer is improved. The performance of the olefin polymerisation catalyst is improved because a greater number of exposed active sites having the desired environment exist.

Several ways of forming the solid structure in step (a) of the method according to the first aspect of the present invention may be proposed. For example, one simply may expose the chiral molecules to a metal crystal. Such a step may be based on the experimental procedure set out in J. Phys. Chem. B1999, 103,10661-10669 as referred to.

However, preferably, one may use electrolysis to form the solid support in step (a). For example an electrolyte contai ning the metal and the chiral adsorbate may be provided. In this regard, the metal and chiral adsorbate may be deposited from the electrolyte onto an electrode in such a way that the chiral adsorbate bestows chirality or pro-chirality onto the created surface.

Where electrolysis is used in step (a), conditions such as temperature, pH, chiral adsorbate concentration in the electrolyte, metal concentration in the electrolyte, residence time, voltage, and amperage may be optimised by routine experimentation. Further, coverage (e.g. low or high) of the chiral adsorbate on the metal surface, may be optimised. By appropriate selection, one can create extended chiral surfaces of the solid support.

The present method favours the formation of crystal faces of the solid support crystal lattice in step (a) that are chiral or pro-chiral i.e. they provide an environment whereby exposed chiral active sites of the catalyst are formed when a supported catalyst is formed using the solid support. Preferably substantially all, even more preferably all, of the crystal faces of the solid support crystal lattice provide an environment whereby chiral active sites of the catalyst are formed when a supported catalyst is formed using the solid support.

The adsorbate-induced change in surface morphology of the deposited metal is evidenced by more favoured crystal faces as compared with the metal when deposited in the absence of the chiral adsorbate. The presence of the chiral adsorbate in the electrolyte can thus directly modi fy the microscopic crystal shape of the metal layer. Without wishing to be bound by theory it is thought that thermodynamic and kinetic factors favour the changes in surface morphology that have been observed.

The crystal faces that are favoured in the p resent method need not be topologically chiral. In some cases, it is sufficient that the faces are pro-chiral i.e. they provide a chiral environment for the catalyst active sites in the supported catalyst crystal lattice. However, in one embodiment, preferably, the crystal faces of the solid support crystal lattice formed in step (a) are chiral planes.

Typically, the support will comprise a porous electrode. The electrode should be porous in order to facilitate break -up before and during any subsequent polymerisation reaction. The electrode material must be selected so that it is thermodynamically favourable for electron transfer to occur to the metal to be deposited during electrolysis. Examples of suitable porous electrodes include graphite and a p roper salt of the metal in the electrolyte (such as a proper salt of nickel, proper salt of iron).

The metal to be deposited may be for example nickel or iron. The metal layer deposited during electrolysis should be very thin, for example of the order of 10 nm. The thickness of the metal layer preferably is in the range of from 1 to 50nm, more preferably in the range of from 5 to 50nm. Further, a preferred concentration range for the metal in the electrolyte is 5 to 10% in a polar solvent. If the concent ration is too high, electrolysis will proceed too rapidly and the formed surface will not be uniform. As such, lower concentrations are preferred.

The chiral adsorbate does not bind directly to the electrode. Instead, it is thought that the chiral adsorbate is adsorbed onto the metal surface through long range hydrogen bonding. The chiral adsorbate has a chiral centre. Without wishing to be bound by theory, it is thought that binding of the chiral adsorbate to the surface of the metal spans the chiral centre of the chiral adsorbate. Preferably, the chiral adsorbate is organic, more preferably comprising a chiral carbon atom. A chiral carbon atom usually will have four different substituents so that the carbon group cannot be superimposed to its mirror image. Examples of possible chiral adsorbates include tartaric acid, monosodium tartrate, and disodium tartrate.

Without wishing to be bound by theory, it is thought that the chiral adsorbate is not introduced into the support crystal lattice. Instead, it is thought that the effects result from interactions between the metal adsorbent and the chiral adsorbate at the surface of the metal. In this regard, the effects of the chiral adsorbate may be contrasted with the effects of impurity species where th e impurity species may be incorporated into the bulk of the metal.

The optimum concentration for a particular chiral adsorbate in the electrolyte may be determined by experiment, starting first at low concentrations and continuing at higher concentrations . Preferred concentration ranges are related to the concentration of the metal ions. However, broadly, one may define a preferred molar ratio of the chiral agent to metal ions in the solvent as being in the range of from 2:1 to 5:1.

The skilled man will be able to select an appropriate electrolyte solvent. In this regard, in one embodiment, it is desirable for the chiral adsorbate to be the electrolyte solvent.

In the first aspect of the present invention, it is preferred that an activated Ziegler-Natta, metallocene or post-metallocene catalyst or a pre-catalyst thereof is immobilised on the solid support.

When the catalyst is immobilised on the support in step (b), to form a supported catalyst, the crystal faces of the solid support bestow or induce formation of chiral crystal faces of the supported catalyst crystal lattice. Procedures for immobilising a catalyst or pre-catalyst thereof on the crystal faces of the support crystal lattice will be known to a person skilled in this art. For example, this may be achieved by addition of a transition metal chloride or by aromatisation and addition.

In step (b) a catalyst or pre-catalyst thereof is immobilised on the crystal surfaces of the support crystal lattice. In this regard in some cases, a precursor to the catalyst or pre-catalyst may in fact be used as a starting material. As such, the terms 'catalyst' and 'pre-catalyst' in step (b) are intended to encompass precursors thereof. In such cases, typically the immobilisation step will convert the precursor into the catalyst or pre-catalyst. As such, typically, no separate conversion step is needed.

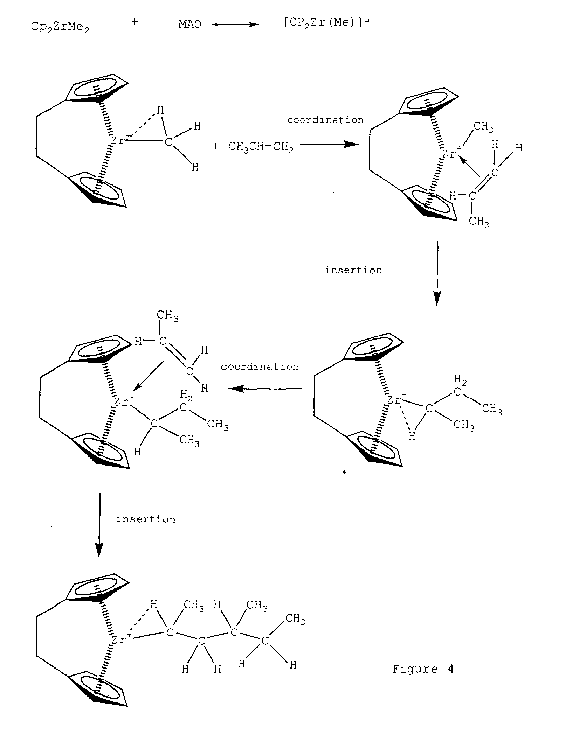

Where the catalyst system is a metallocene catalyst system the support (and specifically the chiral adsorbate) may complex with a transition metal in order to create a metallocene active centre. As such, the chiral adsorbate must be suitable for use in this complexing step. Originally, the term "metallocene" meant a complex with a metal sandwiched between two cyclopentadienyl (Cp) ligands. With the development of this field, this term now encompasses a wider range of organometallic structures including substituted Cp complexes, bent sandwich structure and mono Cp complexes. As for Ziegler-Natta catalyst systems, metallocene catalyst systems generally comprise a pre-catalyst and an activating agent. A widely used activating agent is methylaluminoxane (MAO). A mechanism for polymerisation using a metallocene catalyst system is shown in Figure 4.

As for metallocenes, where the catalyst system is a post - metallocene catalyst system, the support (and specifically the chiral adsorbate) may complex with a transition metal in order to create a post-metallocene active centre. As such, the chiral adsorbate must be suitable for use in this complexing step. Effectively, post-metallocenes are "Cp-free" metallocenes i.e. a complex with a metal chelated by coordinative bonds between ancillary ligands other than the usual Cp -type ligands.

Typical metallocene and post-metallocene transition metal active centres include Fe, Co, Ni, Zr and Ti.

As for Ziegler-Natta catalysts, the chiral environment of a metallocene or post-metallocene catalyst can control the stereochemical configuration of a polyolefin product. In metallocene and post-metallocene catalyst systems, the structure/geometry of the ligands can be used to control polymer architecture. In this regard, chirality is the most important element in the stereochemistry of alpha-olefin polymerisation catalyst systems. In combination with symmetry, chirality determines the nature of the crystalline alpha-olefin polymer produced (i.e. syndiotactic, isotactic, stereoblock ...).

For the catalysts based on metallocene and post-metallocene components, the chirality and symmetry of the metallocene or post-metallocene are imparted by the ancillary organic ligands. In this regard, isotactic polypropylene is obtained using a stereorigid chiral, metallocene or post -metallocene.

Metallocenes and post-metallocenes may be heterogenized by supporting the metallocene on an inorganic or insoluble support.

Supported metallocene or post-metallocene catalysts show better long term stability and can be used to give polymers having a broad or bimodal molecular weight distribution (with improved rheological and physical properties) and higher polymer bulk density. Also, large quantities of activating agent required in homogeneous metallocene catalysis can be reduced for the heterogeneous counterpart.

Where an active catalyst is used in step (b), no activation step is needed.

Where a pre-catalyst is used in step (b), activation of the pre - catalyst is achievable, for example, merely by the act of immobilising the catalyst on the support or by the use of a separate activating agent of the types defined below in relation to the third aspect of the present invention.

Turning now to the second aspect of the present invention, the olefin polymerisation catalyst may comprise any suitable olefin polymerisation catalyst. In this regard, Ziegler -Natta catalysts and metallocene catalysts and post-metallocene catalyst systems have been found to be particularly useful. These types of catalyst systems are well known to a man skilled in this art. Preferably, the catalyst is a stereospecific catalyst.

Ziegler-Natta precatalysts of particular interest are transition metal derivatives typically a halide or ester of a transition metal that may be activated with AlR ₃ where R is an alkyl group. The Zeigler-Natta catalyst may be homogeneous or heterogeneous. Preferably, the activated Ziegler-Natta catalyst is TiCl₃.

In the case of a metallocene or post-metallocene catalyst the chiral adsorbate may be a ligand that is complexed, in the finished product, to a metallocene or post-metallocene active centre. In this embodiment, the chiral adsorbate must ha ve suitable properties so that it is capable of complexing with a transition metal, such as Fe, Co, Ni, Zr, or Ti, in order to create a metallocene or post-metallocene active centre. To a large extent the catalyst will be determined by the desired polyolefin. As such, in different embodiments a C₁, Cₛ or C₂ symmetric metallocene may be preferred. Generally, a Cₛ symmetric metallocene is used to produce a syndiotactic polyolefin while a C₁ or C₂ symmetric metallocene is used to produce an isotactic polyolefin.

Suitable metallocene and post-metallocene catalysts include Group VIII metal metallocene and post-metallocene catalysts, preferably Fe and Ni post-metallocenes. Zirconocene catalysts also are preferred.

The pre-catalyst eventually must be in its activated form when immobilised on the solid support. Activation of a pre-catalyst is achievable, for example, merely by the act of immobilising the pre-catalyst on the support or by the use of a separate activating agent.

In the second aspect of the pre sent invention, it is preferred that the supported, activated catalyst has an increased number of exposed chiral active sites as compared with a corresponding catalyst that has not been prepared according to the first aspect of the invention. More preferably, substantially all, even more preferably all, of the exposed active sites of the supported, activated catalyst are chiral. Even more preferably, substantially all of the crystal faces of the supported catalyst crystal lattice are chiral.

In a third aspect according to the present invention, there is provided a method for producing a polyolefin, which method comprises polymerising an olefin monomer in the presence of a supported olefin polymerisation catalyst as defined in the second aspect of the present invention. The system may comprise further catalysts, if necessary.

The catalyst system of the present invention may comprise a pre - catalyst and one or more activating agents capable of activating the pre-catalyst. Typically, the activating agent comprises an aluminium- or boron- containing activating agent.

Suitable aluminium-containing activating agents comprise an alumoxane, an alkyl aluminium compound and/or a Lewis acid.

Alumoxane activating agents are suitable for metallocene or post-metallocene catalysts. The alumoxanes that can be used in the present invention are well known and preferably comprise oligomeric linear and/or cyclic alkyl alumoxanes represented by the formula (A): 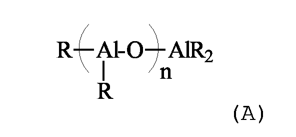 for oligomeric linear alumoxanes; and formula (B) 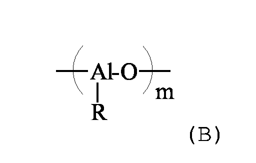 for oligomeric cyclic alumoxanes,
wherein n is 1-40, preferably 10-20; m is 3-40, preferably 3-20; and R is a C₁-C₈ alkyl group, preferably methyl. Generally, in the preparation of alumoxanes from, for example, aluminium trimethyl and water, a mixture of linear and cyclic compounds is obtained.

Other preferred activating agents include hydroxy isobutylaluminium and metal aluminoxinates. These are particularly preferred for metallocenes as described in Main Group Chemistry, 1999, Vol. 3, pg 53-57; Polyhedron 18 (1999), 2211-2218; and Organometallics 2001, 20, 460-467.

In the embodiment where the catalyst is TiCl₃, it is preferred that TEAL (triethyl aluminium) also is present with the catalyst. For a metallocene precatalyst, it is preferred that the activating agent comprises MAO (methyl alumoxane), boron, and either hydroxyisobutyl aluminium or a metal aluminoxinate. For a post-metallocene catalyst, it is preferred that the activating agent comprises MAO and boron.

Suitable boron-containing activating agents may comprise a triphenylcarbenium boronate, such as tetrakis -pentafluorophenylborato-triphenylcarbenium as described in EP -A-0427696: 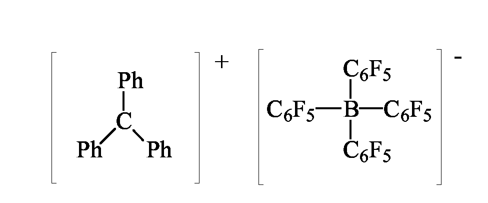 or those of the general formula below, as described in EP-A-0277004 (page 6, line 30 to page 7, line 7):

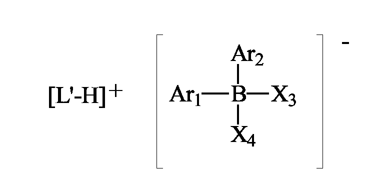

The amount of alumoxane usefully employed in the preparation of the solid support catalyst can vary over a wide range. Generally the aluminium to transition metal mole ratio is in the range between 1:1 and 100:1, preferably in the range 5:1 and 80:1 and more preferably in the range 5:1 and 50:1.

Preferred or suitable polymerisation conditions will be dependent on the catalyst, the polyolefin product and the polymerisation technique.

The method preferably is for preparing a stereoregular polypropylene, more preferably an isotactic, syndiotactic or stereoblock polypropylene or polyethylene.

In the method according to the third aspect of the present invention, preferably, the olefin monomer is propylene or ethylene.

The conditions under which polymeris ation is carried out are not especially limited.

Typically, the polymerising step is carried out as a solution, gas, or slurry polymerisation process. Further, the polymerising step conveniently may be carried out in a loop reactor.

In a fourth aspect of the present invention, there is provided a polyolefin obtainable by or obtained by the method according to the third aspect of the present invention.

The present invention now will be described in more detail with reference to the attached Figures in wh ich:
Figure 1 shows a proposed mechanism for polymerisation using a Ziegler-Natta catalyst;
Figure 2 shows crystal faces of titanium tetrachloride supported on magnesium dichloride;
Figure 3 shows the symmetry of MgCl₂ - supported titanium tetrachloride;
Figure 4 shows a mechanism for polymerisation using a metallocene catalyst;

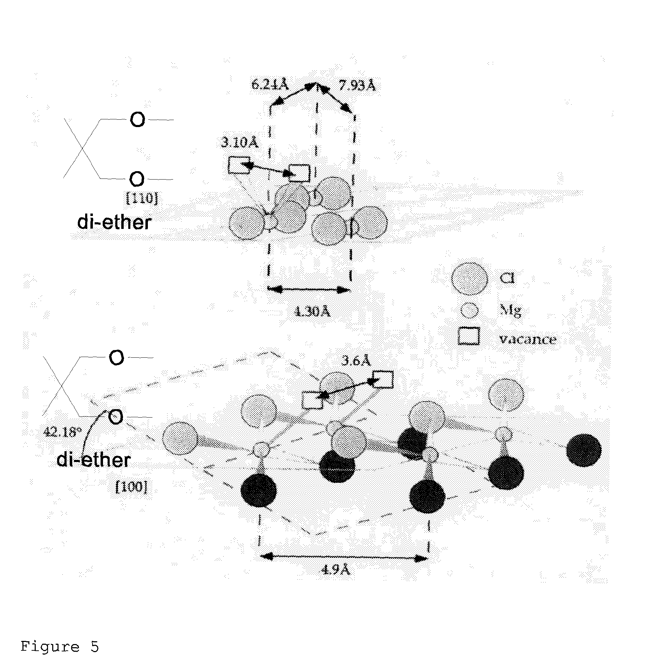

Figure 5 shows the difference in geometry between a [110] plane and a [100] plane in an MgCl₂ crystal lattice. A difference in distance between vacant sites leads to a differe nce in coordination number of the Mg. This, in turn, causes a difference in electrophilic character.

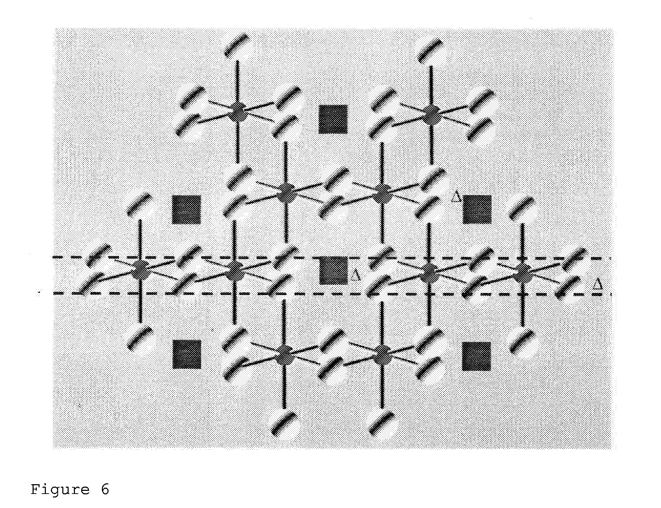

Figure 6 represent the crystal lattice of α-TiCl₃.

## Claims

1. A method for making a supported olefin polymerisation catalyst, including the steps of:
(a) forming a solid support comprising a metal adsorbent having a chiral adsorbate adsorbed to the surface thereof;
whereby the presence of the chiral adsorbate favours the formation of chiral or pro-chiral crystal faces of the solid support crystal lattice and;
(b) immobilising a catalyst or pre-catalyst thereof on the chiral or pro-chiral crystal faces, and optionally activating the pre-catalyst, to form a supported olefin polymerisation catalyst.

2. A method according to claim 1, wherein step (a) comprises depositing the metal and chiral adsorbate by electrolysis from an electrolyte to form a solid support,

3. A method according to claim 1 or claim 2, wherein the chiral adsorbate is organic.

4. A supported olefin polymerisation catalyst preparable by the method as defined in any one of claims 1 to 3.

5. A catalyst according to claim 4, wherein the catalyst has an increased number of chiral exposed active sites.

6. A catalyst according to claim 5, wherein substantially all of the exposed active sites of the catalyst are chiral.

7. A catalyst according to any one of claims 4 to 6, wherein the catalyst is a Ziegler-Natta catalyst.

8. A catalyst according to any one of claims 4 to 6, wherein the catalyst is a metallocene or post-metallocene catalyst.

9. A method for producing a polyolefin, which method comprises polymerising an olefin monomer in the presence of a supported olefin polymerisation catalyst as defined in any one of claims 4 to 8.

10. A method according to claim 9, wherein the olefin monomer is propylene or ethylene.

11. A polyolefin obtained by the method as defined in claim 9 or claim 10.
